# EUROPÄISCHE PATENTSCHRIFT

(11) **EP 3 312 998 B1**
(45) Veröffentlichungstag und Bekanntmachung des Hinweises auf die Patenterteilung: **11.11.2020**
(21) Anmeldenummer: 17198098.0
(22) Anmeldetag: 24.10.2017
(51) Int. Cl.: H04B 3/54, H04B 3/56, H04B 3/58

(54) **POWERLINE-MODUL UND VERFAHREN ZUR KOMMUNIKATION UNTER VERWENDUNG VON POWERLINE COMMUNICATION SOWIE ENTSPRECHENDE KOMMUNIKATIONSEINHEIT UND SYSTEM**
POWER LINE MODULE AND METHOD FOR COMMUNICATING USING POWERLINE COMMUNICATION, CORRESPONDING COMMUNICATIONS UNIT AND SYSTEM
MODULE DE LIGNE DE PUISSANCE ET PROCÉDÉ DE COMMUNICATION À L'AIDE D'UNE COMMUNICATION DE LIGNE DE PUISSANCE AINSI QU'UNITÉ ET SYSTÈME DE COMMUNICATION CORRESPONDANTS

(30) Priorität: 24.10.2016 DE 102016220878
(43) Veröffentlichungstag der Anmeldung: 25.04.2018
(73) Patentinhaber: Power Plus Communications AG, 68167 Mannheim (DE)
(72) Erfinder: Rindchen, Markus, 67574 Osthofen (DE); Mayer, Eugen, 68305 Mannheim (DE)
(74) Vertreter: Patent- und Rechtsanwälte Ullrich & Naumann

(56) Entgegenhaltungen:
- WO-A1-2010/017549
- US-A- 5 434 865
- US-A1- 2003 039 257
- US-A1- 2004 223 617
- US-B1- 6 507 573

## Beschreibung

Die Erfindung betrifft ein Powerline-Modul zur Kommunikation unter Verwendung von Powerline Communication über ein Energieversorgungsnetzwerk. Die Erfindung betrifft ferner eine Kommunikationseinheit mit einem entsprechenden Powerline-Modul und ein System mit mehreren derartigen Kommunikationseinheiten. Ferner betrifft die Erfindung ein Verfahren zur Kommunikation unter Verwendung von Powerline Communication über ein Energieversorgungsnetzwerk.

Powerline Communication (PLC) nutzt gebräuchliche Energieversorgungsleitungen für die Übertragung von Daten. Bei der Breitbandvariante (BPL - Breitband Powerline) werden die zu übertragenden Daten üblicherweise im Frequenzbereich zwischen 1 MHz und 30 MHz moduliert und paketiert in BPL-Rahmen als BPL-Signale über die Energieversorgungsleitungen übertragen. Dabei deckt die BPL-Ebene die Schichten 1 und 2 des OSI-Modells (Open Systems Interconnetion Model) ab, also die Bitübertragungsschicht (PHY - Physical Layer) und die Sicherungsschicht (MAC - Medium Access Control). Den darüber liegenden Schichten, d.h. ab Schicht 3, erscheint BPL wie ein gewöhnlicher Ethernet-Port (ETH-Port). Meist kommt in Schicht 3 das Internet-Protokoll (IP) zum Einsatz.

Wenn BPL-Signale in die Energieversorgungsleitungen eingekoppelt werden, breiten sie sich über einen relativ weiten Bereich des Energieversorgungsnetzwerks aus. Der Ausbreitungsradius - die sogenannte Attenuation Domain - wird dabei maßgeblich von der Dämpfung der BPL-Signale bei der Ausbreitung im Energieversorgungsnetzwerk, von Reflektionen des BPL-Signals in dem Energieversorgungsnetzwerk sowie vorhandenen Störungen bestimmt. Jedes innerhalb dieses Ausbreitungsradius angeordnete BPL-Gerät kann die BPL-Signale mithören und prinzipiell verarbeiten. Dieser für die Verteilung der BPL-Signale vorteilhafte Umstand ist bei einigen Anwendungen problematisch. Ein derartiger Fall liegt beispielsweise im Zusammenhang mit einem SmartMeter-Gateway vor.

Ein SmartMeter-Gateway (SMGW) ist eine zentrale Kommunikationseinheit eines intelligenten Messsystems. In Deutschland ist der Aufbau und die Funktionsweise eines SMGWs durch zwei Schutzprofile und eine Technische Richtlinie (TR) des BSI (Bundesamt für Sicherheit in der Informationstechnik) vorgeschrieben. Ein Lastenheft des FNN (Forum Netztechnik/Netzbetrieb) beschreibt weitere Implementierungsdetails. Nach diesen Vorschriften ist definiert, dass das SMGW separate Kommunikationsschnittstellen aufweisen muss. Hierzu gehören Schnittstellen zu einem WAN (Wide Area Network), einem HAN (Home Area Network) und einem LMN (Local Metrological Network). Das WAN wird für die Kommunikation nach "außen" verwendet, beispielsweise zu einem Energieversorger. In dem HAN befinden sich Kundengeräte, die beispielsweise auf Daten eines SmartMeters zugreifen können, der im LMN angeordnet ist. Zu dem HAN gehört auch ein CLS (Controllable Local System)-Interface, über das Geräte, wie regelbare Erzeuger oder unterbrechbare Verbraucher, ferngesteuert werden können. Jede Kommunikation zwischen den einzelnen Netzen (WAN, HAN, LNM) darf lediglich über das SMGW erfolgen. Die Netze müssen logisch voneinander getrennt sein, weshalb meist eine separate Netzwerkstruktur verwendet wird. So kommt beispielsweise für die Anbindung zum WAN ein BPL-Netz zum Einsatz, während die Anbindung zum HAN über Ethernet/ WLAN (Wireless Local Area Network) und die Anbindung zum LNM über M-Bus oder wireless M-Bus erfolgt.

Prinzipiell wäre es wünschenswert, wenn BPL sowohl für die WAN-Schnittstelle als auch für die HAN-Schnittstelle genutzt werden könnte. Wegen der zuvor beschriebenen Mithörfähigkeit jedes angeschlossenen BPL-Gerätes ist es hierbei jedoch nicht möglich, die geforderte Trennung zwischen WAN und HAN herbeizuführen. Dadurch könnte ein Gerät im WAN direkt mit einem Gerät im HAN kommuniziert, ohne dass das SMGW an der Kommunikation beteiligt ist oder die Kommunikation kontrollieren könnte. Zwar wäre eine entsprechende Steuerung der Kommunikation auf übergeordneten Ebenen (d.h. ab Schicht 3) möglich, beispielsweise über Verschlüsselung der Kommunikation im HAN. Dennoch widerspricht die nicht stattfindende Trennung zwischen WAN und HAN den Anforderungen der TR.

Sofern BPL verwendet werden soll, ist daher der Aufbau separater BPL-Infrastrukturen für getrennte Netze notwendig. D.h. ein erstes BPL-Netz würde die WAN-Seite abdecken, während ein zweites BPL-Netz für das HAN oder Teile des HAN genutzt wird. Dies verursacht jedoch einen erheblichen Aufwand und damit nicht unerhebliche Zusatzkosten. Zum einen müssen Infrastrukturknoten mehrfach vorgesehen sein. Zum anderen muss eine signaltechnische Trennung der BPL-Netze hergestellt werden, da die BPL-Netze auf einem gemeinsamen Teil eines Energieversorgungsnetzwerks betrieben werden. Damit ist in diesem Szenarium die gleichzeitige Nutzung von BPL für WAN und HAN unattraktiv.

Auch wenn sich die voranstehende Problembeschreibung auf ein SMGW und BPL bezieht, so wird ein Fachmann erkennen, dass die beschriebene Problematik auch bei anderen Anwendungen von Powerline Communication besteht, bei denen getrennte Netze aufgespannt werden sollen oder müssen. So kann es beispielsweise notwendig sein, ein Gäste-Netzwerk aufzuspannen, das von einem "internen" Netzwerk logisch getrennt ist, wobei sowohl das Gäste-Netzwerk als auch das "interne" Netzwerk unter der Verwendung von Powerline betrieben werden soll.

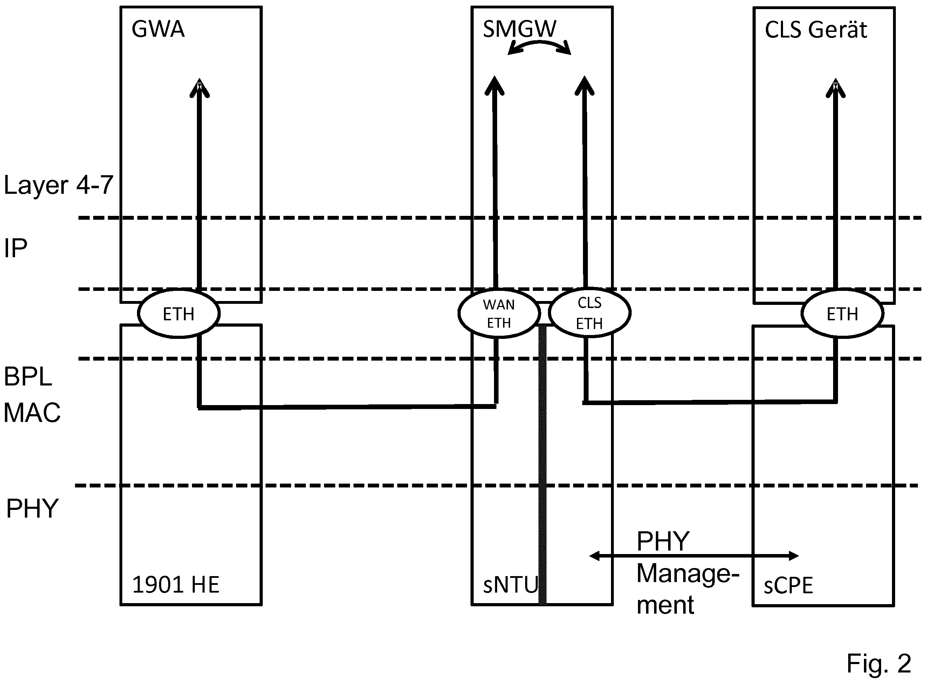

Aus der WO 2010/017549 A1 ist ein System zur zuverlässigen Datenkommunikation über Energieversorgungsleitungen bekannt. Es sind Repeater-Knoten offenbart, die Interfaces für eine Verbindung mit zwei oder mehr Mittelspannungsleitungen und ein weiteres I/O-Interface, beispielsweise zur Kommunikation mit einem Ethernet-Netzwerk, aufweisen. Bei dem Ausführungsbeispiel gemäß Fig. 2A ist für jede Mittelspannungsleitung ein Repeater-Modul vorgesehen. Jedes Repeater-Modul umfasst zwei PLC-Prozessoren, die jeweils eine "Kommunikationsrichtung" auf der verbundenen Mittelspannungsleitung abdecken. Zur Trennung der Kommunikationsrichtungen auf der Mittelspannungsleitung sind bei der Ankoppelstelle Ferrite um die Leitung herum angeordnet, die PLC-Signale in eine Richtung weitgehend wegdämpfen und damit eine Übertragung in nur eine Richtung von der Ankoppelstelle weg ermöglichen. Der Repeater-Knoten der Fig. 2A umfasst ferner zwei Weiterleitungsprozessoren, die jeweils Weiterleitungsoperationen durchführen können.

Die US 5,434,865 offenbart ein Protokoll für ein Multi-Knoten-Netzwerk, wobei der Haupteinsatzbereich ein vermaschtes Netzwerk für die Überwachung und Steuerung eines Energieversorgungsnetzwerks ist. Das Netzwerk ist in Zonen eingeteilt, die jeweils eine Master-Einheit enthalten. Gateway-Knoten ermöglichen eine Kommunikation zwischen den Zonen und sind mit den Master-Einheiten der benachbarten Zonen kommunizierend verbunden. Die Master-Einheit fragt bei den zugeordneten Netzwerk-Knoten ab, ob eine Nachricht zum Versenden vorliegt. Wenn ein Knoten eine Nachricht zu versenden hat, wird die Nachricht in die Zone "geflutet". Auf diese Weise erhält der Zielknoten mehrere Kopien der Nachricht. Jede Nachricht enthält eine eindeutige ID. Jeder Knoten einer Zone leitet diese Nachricht weiter, sofern sich die ID nicht bereits in einem Speicher bereits weitergeleiteter Nachrichten befindet und der Sendeknoten zu der eigenen Zone gehört.

Die US 6,507,573 B1 offenbart ein Datenübertragungssystem für Niederspannungsnetzwerke, bei dem zu übertragende Daten mit einem für die Übertragungsrichtung spezifischen Code codiert sind. Ein Repeater-Knoten verarbeitet die Daten nur dann, wenn er dem jeweils verwendeten Code zugeordnet ist.

Aus der US 2004/0223617 A1 ist einen Repeater bekannt, der das Kodieren und Dekodieren mit zwei verschiedenen Codes beherrscht. Wenn ein Datenpaket empfangen wird, das mit einem der beiden Codes kodiert ist, wird das Datenpaket dekodiert und mit dem jeweils anderen Code kodiert wieder ausgesendet. Dadurch entstehen quasi code-basierte Subnetze.

Die US 2003/0039257 A1 betrifft einen Netzwerk-zu-Netzwerk-Adapter für Powerline Communication. Dabei fungiert der Adapter als ein Gateway zwischen zwei Netzwerken, wobei die Trennung zwischen den Netzwerken durch unterschiedliche Kodierung oder Modulierung der Kommunikationssignale oder durch die Verwendung getrennter Frequenzbereiche erreicht wird. Hierbei kann ein spezifischer Code verwendet werden, der lediglich dem Empfängerknoten bekannt ist.

Der vorliegenden Erfindung liegt die Aufgabe zugrunde, Mittel anzugeben, mit denen das Aufspannen mehrerer logisch getrennter Netze über Powerline Communication, insbesondere Breitband Powerline, möglich ist.

Erfindungsgemäß wird die voranstehende Aufgabe durch die Merkmale des Anspruchs 1 gelöst. Danach ist ein Powerline-Modul zur Kommunikation unter Verwendung von Powerline Communication über ein Energieversorgungsnetzwerk angegeben, das umfasst:
eine Powerline-Schnittstelle, die zum Empfangen von Powerline-Rahmen aus einem mit dem Powerline-Modul verbundenen Energieversorgungsnetzwerk ausgebildet ist,
mindestens eine Uplink-Schnittstelle, die zum Verbinden und zum Austausch von Datenpaketen mit einem übergeordneten Kommunikationsmodul ausgestaltet ist/sind, und
eine Weiterleitungseinheit, die dazu ausgebildet ist, eine Quell- und/oder Zieladresse eines empfangenen Powerline-Rahmens als Adressinformationen zu extrahieren und den empfangenen Powerline-Rahmen basierend auf den Adressinformationen und basierend auf Weiterleitungsrichtlinien zu verwerfen oder einer weiteren Verarbeitung und/oder einer Ausgabe an eine der mindestens einen Uplink-Schnittstellen zuzuleiten.

Die voranstehende Aufgabe ist ferner durch eine Kommunikationseinheit nach Anspruch 8 und ein System nach Anspruch 13 gelöst.

In verfahrensmäßiger Hinsicht ist die voranstehende Aufgabe durch die Merkmale des Anspruchs 15 gelöst. Danach umfasst das beanspruchte Verfahren die Schritte:
Empfangen eines Powerline-Rahmens aus einem Energieversorgungsnetzwerk,
Extrahieren einer Quell- und/oder Zieladresse aus dem Powerline-Rahmen zum Gewinnen von extrahierten Adressinformationen,
Bewerten der extrahierten Adressinformationen durch eine Weiterleitungseinheit basierend auf Weiterleitungsrichtlinien und
Verwerfen des Powerline-Rahmens oder Verarbeiten und/oder Ausgeben des Powerline-Rahmens an eine der mindestens eine Uplink-Schnittstellen basierend auf dem Ergebnis der Bewertung durch die Weiterleitungseinheit.

Vorteilhafte Ausgestaltungen sind in den abhängigen Ansprüchen beschrieben.

In erfindungsgemäßer Weise ist zunächst erkannt worden, dass eine logische Trennung von Netzwerken trotz der Verwendung von Powerline auch ohne getrennte Powerline-Infrastrukturen möglich ist. Hierzu wird erfindungsgemäß ein modifiziertes Powerline-Modul vorgeschlagen, das - im Gegensatz zu bekannten Powerline-Modulen - nicht jeden ankommenden oder zu versendenden Powerline-Rahmen verarbeiten darf. Zu diesem Zweck sind in dem erfindungsgemäßen Powerline-Modul Weiterleitungsrichtlinien implementiert, die den Umgang mit einem empfangenen Powerline-Rahmen festlegen. Konkret definieren die Weiterleitungsrichtlinien, ob ein über ein Energieversorgungsnetzwerk empfangener Powerline-Rahmen verworfen werden muss oder weiterverarbeitet werden darf. Damit bilden die Weiterleitungsrichtlinien eine Art "Verhaltenskodex" für das Powerline-Modul.

Das erfindungsgemäße Powerline-Modul weist hierfür eine Powerline-Schnittstelle, mindestens eine Uplink-Schnittstelle und eine Weiterleitungseinheit auf. Die Weiterleitungseinheit greift auf die Weiterleitungsrichtlinien zu, die in der Weiterleitungseinheit oder in einem von der Weiterleitungseinheit zugreifbaren Speicher abgelegt sind, und trifft basierend auf den Weiterleitungsrichtlinien eine Entscheidung über die Verarbeitung eines über die Powerline-Schnittstelle empfangenen Powerline-Rahmens. Nur wenn ein empfangener Powerline-Rahmen durch eine übergeordnete Kommunikationseinheit empfangen werden darf, verarbeitet die Weiterleitungseinheit den Powerline-Rahmen und leitet den Powerline-Rahmen oder dessen Inhalt für die Verarbeitung weiter. Empfänger des Powerline-Rahmens oder dessen Inhalts könnte beispielsweise ein BPL-Modem-Chip oder eine der Uplink-Schnittstellen sein.

Für die Entscheidungsfindung wird erfindungsgemäß eine Quell- und/oder Zieladresse eines über die Powerline-Schnittstelle empfangenen Powerline-Rahmens als Adressinformationen extrahiert. Die extrahierten Adressinformationen werden durch die Weiterleitungseinheit basierend auf den Weiterleitungsrichtlinien bewertet. Wenn die Weiterleitungsrichtlinien eine Weiterverarbeitung für die Adressinformationen erlauben, wird der Powerline-Rahmen weiterverarbeitet, indem beispielsweise die in dem Powerline-Rahmen enthaltenen Daten extrahiert und an die Uplink-Schnittstelle ausgegeben werden. Auf diese Weise kann über die Weiterleitungsrichtlinien definiert werden, welche Geräte innerhalb eines Powerline-Netzwerks miteinander kommunizieren dürfen und welche nicht. Zwar können Powerline-Rahmen weiterhin von allen Powerline-Modulen innerhalb der Attenuation Domain empfangen werden. Allerdings verhindert die Weiterleitungseinheit effektiv, dass diese Powerline-Rahmen von unberechtigten Geräten verarbeitet werden. Damit lassen sich adressbasierte Netzbereiche definieren, die logisch voneinander getrennt sind.

In seiner Grundfunktion kann das erfindungsgemäße Powerline-Modul dabei einem gekannten Powerline-Modul entsprechen. So kann das erfindungsgemäße Powerline-Modul, das man auch als Sicherheits-Powerline-Modul bezeichnet könnte, einen Powerline-Chip, Schutzbeschaltung, Interface-Schaltungen, Prozessoren und/ oder Programm- und Arbeitsspeicher aufweisen, wie sie bei bekannten Powerline-Modulen gebräuchlich sind. Zusätzlich weist das erfindungsgemäße Powerline-Modul aber noch die Weiterleitungseinheit auf, die - basierend auf den Weiterleitungsrichtlinien - dem Powerline-Modul bzw. einem übergeordneten Kommunikationsgerät gewisse Kommunikationsrechte über Powerline gewähren oder versagen kann.

Die Adressinformationen, die aus dem Powerline-Rahmen extrahiert werden, können prinzipiell auf die verschiedensten Arten gebildet sein. So ist es möglich, jegliche in dem Powerline-Rahmen übertragenen Informationen, die als Adresse wertbar sind, als extrahierte Adressinformationen zu betrachten. Damit jedoch Teilnetzwerke entstehen können, die tatsächlich logisch voneinander getrennt sind, sollten Adressinformationen aus den OSI-Schichten verwendet werden, über die sich auch Powerline erstreckt. Da Powerline üblicherweise die Schichten 1 und 2 abdeckt, empfehlen sich Adressen, die auf Schicht 2 des OSI-Schichtenmodells zum Einsatz kommen. Damit sind die (extrahierten) Adressinformationen vorzugsweise durch MAC-Adressen - Media Access Control Adressen - gebildet. Hierbei können insbesondere die im Powerline-Bereich weit verbreiteten TEI-Adressen - Terminal Equipment Identifier Adressen - verwendet werden.

Prinzipiell können die Weiterleitungsrichtlinien auf verschiedenste Weise definieren, welche Powerline-Rahmen verarbeitet werden dürfen und welche verworfen werden müssen. So ist beispielsweise denkbar, dass die Weiterleitungsrichtlinien definieren, welche Dienste für die extrahierten Adressinformationen über Powerline geleitet werden dürfen. Auf diese Weise ließen sich beispielsweise bestimmte Multimedia-Dienste für einzelne Geräte sperren und auf diese Weise getrennte Teilnetze erzeugen. Vorzugsweise enthalten die Weiterleitungsrichtlinien aber Informationen, aus welchen Netzsegment und/oder von welchem Powerline-Gerät Powerline-Rahmen empfangen werden dürfen. In dieser Ausgestaltung würden die Weiterleitungsrichtlinien eine Art White-List enthalten. Alternativ können die Weiterleitungsrichtlinien Netzwerkbereiche oder Powerline-Geräte definieren, deren Powerline-Rahmen verworfen werden müssen. In dieser Ausgestaltung würden die Weiterleitungsrichtlinien eine Art Black-List enthalten. Es ist offensichtlich, dass beide Ansätze auch kombiniert werden können. So können einzelne Netzwerksegmente oder Powerline-Geräte explizit erlaubt und andere explizit ausgeschlossen werden. Prinzipiell ist sogar denkbar, dass sich die durch die White- und Black-List abgedeckten Geräte oder Segmente teilweise überdecken. So kann beispielsweise ein Netzwerksegment prinzipiell mit einer White-List freigeschaltet sein, wobei einzelne dedizierte Powerline-Geräte aus diesem Bereich durch die Black-List verboten sind. Hier ist denkbar, dass eine Regelung für ein einzelnes Gerät stets die Regelungen für ein Segment überstimmt.

Aus welchem Netzwerk-Segment ein Powerline-Rahmen stammt, kann durch eine entsprechende Konfiguration definiert sein, auf die die Weiterleitungsrichtlinien verweisen oder auf die die Weiterleitungseinheit ergänzend bei der Bewertung eines Powerline-Rahmens zugreifen könnte. In dieser Konfiguration kann definiert sein, welche Adresse zu einem bestimmten Netzwerk gehört. Mit dem oben genannten Beispiel eines SMGW könnten beispielsweise in der Konfiguration alle Powerline-Knoten hinterlegt sein, die im HAN angeordnet sein sollen. Wenn ein Administrator ein zusätzliches Gerät im HAN freischalten möchte, so müsste er/sie dieses Gerät in der entsprechenden Konfiguration aufnehmen.

Alternativ oder zusätzlich kann beispielsweise über eine dedizierte Adressinformation auf ein Netzwerksegment geschlossen werden. So ist beispielsweise bekannt, mit welchem Headend das Powerline-Modul verbunden ist. Da das Headend eine Verbindung zwischen dem Powerline-Netzwerk und einem Backbone-Netzwerk herstellt, werden üblicherweise die meisten aus dem WAN stammenden Powerline-Rahmen Adressinformationen enthalten, die auf das Headend schließen lassen. Wenn diese Adressinformationen aus dem Powerline-Rahmen extrahiert werden, so kann auf das WAN als Ursprung des bewerteten Powerline-Rahmens geschlossen werden.

Wenn ein Powerline-Modul mehrere Uplink-Schnittstellen aufweist, können die Weiterleitungsrichtlinien bestimmen, an welche Uplink-Schnittstelle die Daten eines empfangenen Powerline-Rahmens weitergeleitet werden dürfen. Wenn beispielsweise die extrahierten Adressinformationen darauf schließen lassen, dass der bewertete Powerline-Rahmen aus dem WAN-Bereich des Powerline-Netzwerks empfangen worden ist, so könnten die Weiterleitungsrichtlinien definieren, dass die Daten aus dem Powerline-Rahmen an eine für WAN-Daten bestimmte Uplink-Schnittstelle geleitet werden.

In einer Weiterbildung können die Weiterleitungsrichtlinien nicht nur definieren, von welchem Gerät oder Segment Powerline-Rahmen empfangen werden dürfen, sondern ergänzend auch, zu welchen Geräten oder Segmenten Powerline-Rahmen versandt werden dürfen. Hierzu können Zieladressinformationen von Datenpaketen, die von einer der Uplink-Schnittstellen empfangen worden sind, extrahier und ausgewertet werden. Basierend auf den Zieladressinformationen und den Weiterleitungsrichtlinien würde dann das Versenden der Daten erlaubt oder unterbunden. Wenn beispielsweise Daten von einer Uplink-Schnittstelle empfangen werden, die Zugang zu einem internen Netzwerk bildet, und wenn dieses Datenpaket an ein Powerline-Gerät im WAN versandt werden soll, so könnte dies durch die Weiterleitungseinheit unterbunden werden. Auf diese Weise können beispielsweise Fehlverhalten durch Manipulationsversuche oder eine fehlerhafte Verkabelung ver-hindert werden.

Das Powerline-Modul kann ein Modem-Modul aufweisen, das zum Extrahieren von in einem Powerline-Rahmen enthaltenen Daten und zum Packen von Daten in einem Powerline-Rahmen ausgebildet ist. Wenn das Powerline-Modul mehrere Uplink-Schnittstellen aufweist, so ist denkbar, dass ein Modem-Modul über einen Multiplexer mit den Uplink-Schnittstellen verbunden ist. Vorzugsweise ist jedoch für jede der Uplink-Schnittstellen ein separates Modem-Modul vorhanden. Auf diese Weise lassen sich die einzelnen Teilnetze noch besser entkoppeln.

Dabei kann das/die Modem-Modul/e ein Schlüssel oder ein Schlüsselpaar aufweisen, die zum Ent- und/oder Verschlüsseln der Daten in den Powerline-Rahmen benötigt werden. Wenn mehrere Modem-Module vorhanden sind, empfiehlt es sich, dass jedes Modem-Modul einen eigenen Schlüssel/ein eigenes Schlüsselpaar verwendet.

Gemäß einem Aspekt der Erfindung bildet das erfindungsgemäße Powerline-Modul zusammen mit einem Kommunikationsmodul eine Kommunikationseinheit. Dabei ist die mindestens eine Uplink-Schnittstelle des Powerline-Moduls mit einer korrespondierenden Schnittstelle an dem Kommunikationsmodul verbunden. Vorzugsweise deckt das Powerline-Modul dabei die OSI-Schichten 1 und 2 und das Kommunikationsmodul die OSI-Schichten 3 bis 7 ab. Das Kommunikationsmodul kann dabei auf verschiedenste Weisen gebildet sein. So ist es denkbar, dass ein einzelnes Gerät alle Schichten ab OSI-Schicht 3 bis zu OSI-Schicht 7 abdeckt. Es ist aber auch möglich, dass das Kommunikationsmodul in mehrere Baugruppen unterteilt ist, so dass einzelne Funktionen und/oder OSI-Schichten durch unterschiedliche Baugruppen realisiert sind.

Prinzipiell kann das Kommunikationsmodul verschiedenste Aufgaben erfüllen. In einer ersten bevorzugten Ausgestaltung ist das Kommunikationsmodul ein SmartMeter-Gateway (SMGW). In dieser Ausgestaltung könnte das Powerline-Modul als sNTU - secured Network Termination Unit - bezeichnet werden. Das SMGW dürfte dabei entsprechend den einschlägigen Richtlinien aufgebaut sein. Wenn beispielsweise die Regelungen für Deutschland angewandt werden, so weist dieses SMGW eine WAN-, eine HAN- und eine LMN-Schnittstelle auf. Wenn die WAN- und die HAN-Schnittstelle über Powerline realisiert werden sollen, so würde bei der Kommunikationseinheit ein Powerline-Modul eingesetzt, das über zwei Uplink-Schnittstellen verfügt. Dabei würde eine erste Uplink-Schnittstelle des Powerline-Moduls mit der WAN-Schnittstelle des SMGW und eine zweite Uplink-Schnittstelle des Powerline-Moduls mit der HAN-Schnittstelle des SMGWs verbunden. In dieser Ausgestaltung würden die Weiterleitungsrichtlinien definieren, dass Daten aus Powerline-Rahmen aus dem WAN-Bereich des Powerline-Netzwerks lediglich an die erste Uplink-Schnittstelle weitergeleitet werden dürfen. Entsprechend würden die Weiterleitungsrichtlinien Daten aus Powerline-Rahmen, die auf dem HAN-Bereich des Powerline-Netzwerks stammen, an die HAN-Schnittstelle weiterleiten.

In dieser Ausgestaltung des Kommunikationsmoduls als SMGW ist die Weiterleitungseinheit vorzugsweise ergänzend dazu ausgebildet, auf ARP-Anfragen (Address Resolution Protocol Requests) für Powerline-Geräte, die mit der Kommunikationseinheit verbunden sind, zu antworten. Wenn beispielsweise im HAN-Netzwerk ein CLS-Gerät angeordnet ist und aus dem WAN-Bereich des Powerline-Netzwerks eine ARP-Anfrage an dieses CLS-Gerät gesendet wird, so würde die Weiterleitungseinheit als Proxy auf dieses ARP-Anfrage antworten. Dabei würde die Weiterleitungseinheit mit der eigenen WAN-MAC-Adresse antworten, so dass das die ARP-Anfrage sendende Powerline-Gerät für den eigentlichen Datentransfer die Adresse des SMGWs bzw. dessen zugehörigem Powerline-Modul verwendet. Auf diese Weise kann noch besser sichergestellt werden, dass der zukünftige Datenverkehr über das SMWG und das damit verbundene Powerline-Modul geleitet wird.

In einer zweiten bevorzugten Ausgestaltung eines Kommunikationsmoduls ist das Kommunikationsmodul durch ein CLS-Gerät (Controllable Local System Gerät) gebildet. In dieser Ausgestaltung kann das Powerline-Modul auch als sCPE (secured Customer Premises Equipment) bezeichnet werden. CLS-Geräte sind im HAN-Netzwerk angeordnet und weisen üblicherweise lediglich eine Schnittstelle in das HAN-Netzwerk auf. Entsprechend würde das Powerline-Modul in dieser Ausgestaltung über eine Uplink-Schnittstelle verfügen, die mit der HAN/CLS-Schnittstelle des Kommunikationsmoduls verbunden wäre.

Wenn in dieser Ausgestaltung das CLS-Gerät in Verbindung mit einem SMGW verwendet wird, so sollte das CLS-Gerät lediglich mit dem zugeordneten SMGW kommunizieren. Daher kann die Weiterleitungseinheit des Powerline-Moduls des CLS-Geräts dazu ausgebildet sein, lediglich die Powerline-Rahmen weiterzuverarbeiten und/oder zur Ausgabe an die Uplink-Schnittstelle weiterzuleiten, wenn die Adressinformationen auf das SMGW als Absender schließen lassen. Umgekehrt kann die Weiterleitungseinheit sämtliche Datenpakete aus der Uplink-Schnittstelle verwerfen, die nicht für das SMGW als Empfänger bestimmt sind.

Nach einem weiteren Aspekt der Erfindung können mehrere erfindungsgemäße Kommunikationseinheiten ein System bilden, das neben den erfindungsgemäßen Kommunikationseinheiten eventuell noch weitere Powerline-Geräte umfasst. Dieses System kann beispielsweise ein SmartMetering-System bilden, das ein SMGW, mindestens einen SmartMeter und mehrere CLS-Geräte aufweist.

Ergänzend kann das erfindungsgemäße System eine Managementeinheit aufweisen, die dazu ausgebildet ist, Weiterleitungsrichtlinien an die einzelnen Kommunikationseinheiten des Systems zu verteilen und dort durchzusetzen. Die Managementeinheit kann dabei ein Interface für einen Administrator bereitstellen. Auf diese Weise kann beispielsweise über die Managementeinheit festgelegt werden, welcher der Powerline-Knoten das SMGW bildet und welches Geräte ein CLS-Gerät mit welchen Funktionen ist. Um mögliche Manipulationen des Gesamtsystems durch unberechtigte Dritte zu verhindern, empfiehlt sich eine besondere Absicherung der Managementeinheit. So wäre beispielsweise denkbar, dass die Managementeinheit lediglich von dedizierten Arbeitsstationen angesprochen werden kann. Ferner könnte eine besondere Verschlüsselung und Authentifikation mit einem Zertifikat implementiert sein.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Blockdiagramm zum Verdeutlichen der Probleme einer bekannten Powerline-Kommunikation,
- Fig. 2: ein Blockdiagramm eines Ausführungsbeispiels eines erfindungsgemäßen Systems mit zwei verschiedenen Ausgestaltungen einer erfindungsgemäßen Kommunikationseinheit und
- Fig. 3: ein Blockdiagramm mit einem Ausführungsbeispiel eines erfindungsgemäßen Powerline-Moduls.

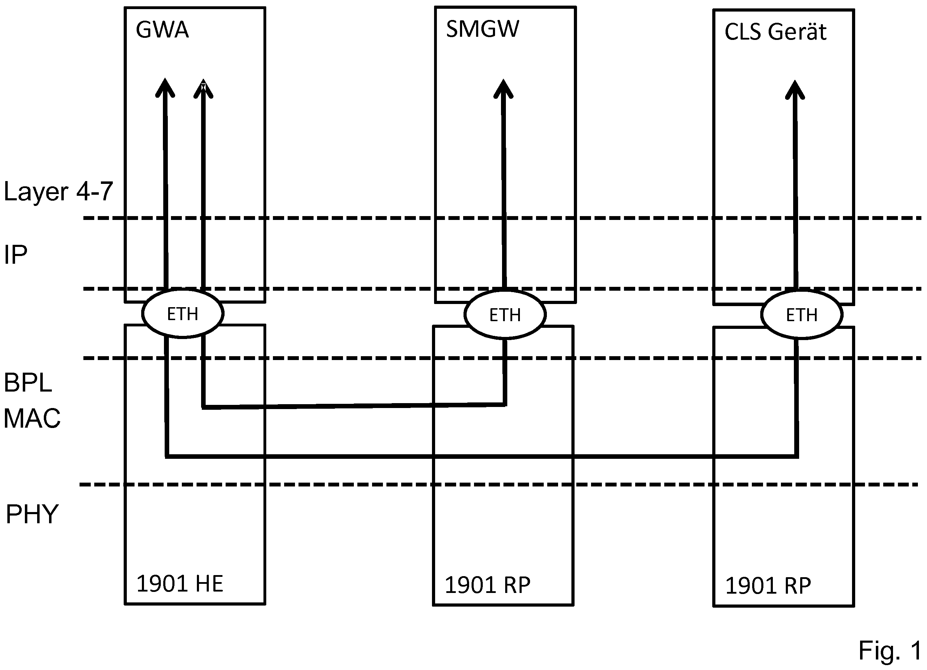

Fig. 1 zeigt ein Blockdiagramm eines Powerline-Systems mit einem Gateway GWA im WAN-Bereich, einem SMGW und einem CLS-Gerät. Die Powerline-Module dieser Powerline-Knoten sind jeweils entsprechend IEEE 1901 ausgebildet. Das Gateway GWA bildet ein Headend HE für das Powerline-System. Das SMWG fungiert ebenso wie das CLS-Gerät als Repeater RP. Die jeweiligen OSI-Schichten, die durch die einzelnen Module abgedeckt sind, sind auf der linken Seite der Fig. 1 angedeutet. Die Powerline-Module decken jeweils die Schichten 1 und 2 (PHY und MAC) ab, die Kommunikationsmodule jeweils die Schichten 3 bis 7.

Bei dem in Fig. 1 dargestellten Powerline-System entstehen eine Vielzahl von Kommunikationsmöglichkeiten, da zum einen mehrere Geräte innerhalb der Attenuation Domain eines Powerline-Geräts angeordnet sind und zum anderen bei Powerline die meisten Powerline-Geräte ergänzend als Repeater für andere Powerline-Geräte fungieren. In Fig. 1 sind beispielhaft zwei mögliche Kommunikationswege eingezeichnet: Ein Gerät im WAN-Bereich kann über GWA sowohl eine Verbindung mit dem SMGW als auch mit dem CLS-Gerät aufbauen. Dies widerspricht aber den Anforderungen des SMGWs, da sämtliche Kommunikation mit dem CLS-Gerät aus dem WAN-Bereich steuern soll.

Bei dem erfindungsgemäßen Powerline-Modul ist dieses Problem gelöst. Ein Beispiel eines hierbei entstehenden Systems ist in Fig. 2 dargestellt. Auch bei Fig. 2 ist ein Gateway GWA, ein SMGW und ein CLS-Gerät vorhanden. Das Powerline-Modul des GWA ist weiterhin entsprechend IEEE 1901 ausgebildet. Die dem SMGW bzw. dem CLS-Gerät zugeordneten Powerline-Module sind jedoch entsprechend der vorliegenden Erfindung ausgestaltet, d.h. das Powerline-Modul weist eine Weiterleitungseinheit auf, die die Verarbeitung empfangener Powerline-Rahmen festlegt. Das dem SMGW zugeordnete Powerline-Modul ist mit sNTU bezeichnet, da das erfindungsgemäße Powerline-Modul einerseits eine NTU (Network Termination Unit) bildet und andererseits die Kommunikation über Powerline entsprechend abgesichert ist. Das dem CLS-Gerät zugeordnete Powerline-Modul ist mit sCPE bezeichnet, da das Nutzerendgerät (CPE - Customer Premises Equipment) durch das erfindungsgemäße Powerline-Modul abgesichert ist.

Die erfindungsgemäßen Powerline-Module (sNTU und sCPE) führen zu einer Auftrennung des Powerline-Netzes in zwei Teilnetze, nämlich - mit Blick auf Fig. 2 - ein erstes Teilnetz auf der linken Seite des SMGWs und ein zweites Teilnetz auf der rechten Seite des SMGWs. Das CLS-Gerät könnte zwar weiterhin ein Powerline-Rahmen von GWA empfangen. Allerdings sorgen die Weiterleitungsrichtlinien des Powerline-Moduls des CLS-Geräts dafür, dass diese Powerline-Rahmen nicht verarbeitet werden dürfen.

Das Powerline-Modul sNTU, das zusammen mit dem SMGW eine Kommunikationseinheit bildet, weist zwei Uplink-Schnittstellen auf. Eine erste Uplink-Schnittstelle ist dabei mit dem WAN-Interface des SMGWs verbunden, eine zweite Uplink-Schnittstelle mit dem HAN-Interface. Die erstgenannte Verbindung ist durch "WAN ETH" bezeichnet, die zweitgenannte Verbindung durch "CLS ETH" (da CLS ein Teil der HAN-Schnittstelle ist). Das Powerline-Modul sCPE, das zusammen mit dem CLS-Gerät eine Kommunikationseinheit bildet, weist eine Uplink-Schnittstelle auf, die als Ethernet-Interface ETH ausgebildet ist.

Wenn in diesem Beispiel ein Powerline-Rahmen von GWA empfangen wird, so extrahiert die Weiterleitungseinheit sNTU zunächst die Adressinformationen. Daraus würde sich ergeben, dass der Powerline-Rahmen aus dem WAN-Bereich empfangen worden ist. Die Weiterleitungsrichtlinien definieren dann, dass der Powerline-Rahmen dann weiterverarbeitet werden darf, wenn er an die erste Uplink-Schnittstelle ausgegebenen wird. Eine Weitergabe in Richtung der HAN-Schnittstelle ist hingegen untersagt. Wenn der gleiche Powerline-Rahmen durch das sCPE empfangen würde, so würde auch dort die Weiterleitungseinheit die Adressinformationen extrahieren. Die Weiterleitungsrichtlinien in dem sCPE definieren aber, dass keine Powerline-Rahmen aus dem WAN-Bereich verarbeitet werden dürfen. Daher würde der Powerline-Rahmen bei dem sCPE verworfen.

Wenn das SMGW ein Datenpaket an das zugeordnete sNTU sendet, so könnten Weiterleitungsrichtlinien definiert sein, die das Verhalten bezüglich dieser Datenpakete festlegt. Wenn beispielsweise das Datenpaket über die WAN-Schnittstelle bei dem sNTU empfangen worden ist und die Adressinformationen auf einem Empfänger im WAN schließen lassen, so kann das sNTU einen entsprechenden Powerline-Rahmen erzeugen und in das Energieversorgungsnetzwerk übertragen. Wenn das Datenpaket zwar über die WAN-Schnittstelle empfangen worden ist, die Adressinformationen aber auf einem Empfänger im HAN-Bereich schließen lassen, so könnte die Weiterleitungseinheit das Datenpaket verwerfen. Hier liegt möglicherweise ein Manipulationsversuch oder eine falsche Verschaltung vor.

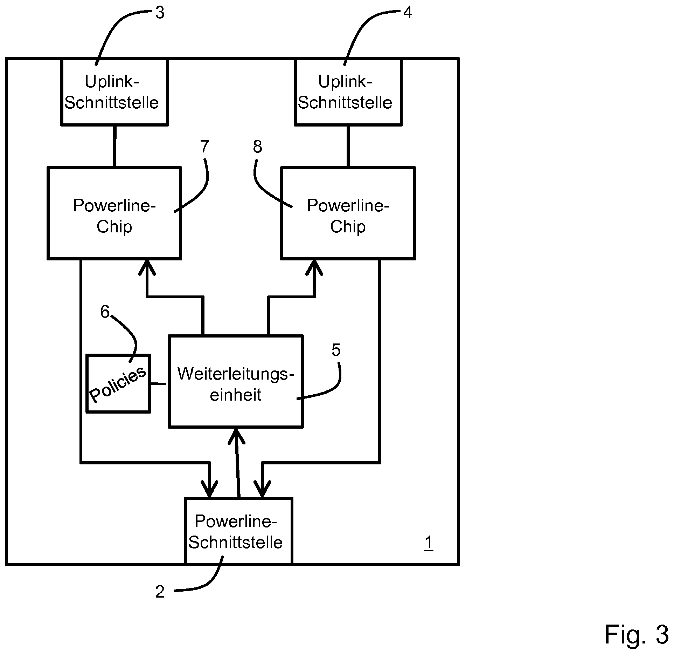

Fig. 3 zeigt ein erstes Ausführungsbeispiel eines erfindungsgemäßen Powerline-Moduls. Das Powerline-Moduls 1 weist eine Powerline-Schnittstelle 2, eine erste Uplink-Schnittstelle 3 für ein WAN-Interface und eine zweite Uplink-Schnittstelle 4 für ein HAN-Interface auf. Mit der Powerline-Schnittstelle 2 verbunden ist eine Weiterleitungseinheit 5 verbunden, an die in diesem Beispiel Powerline-Rahmen aus dem Energieversorgungsnetzwerk über die Powerline-Schnittstelle weitergeleitet werden. Der Weiterleitungseinheit 5 ist ein Speicher 6 zum Speichern von Weiterleitungsrichtlinien zugeordnet, auf den die Weiterleitungseinheit 5 beim Bewerten eines empfangenen Powerline-Rahmens zugreift. Wenn ein Powerline-Rahmen empfangen worden ist, extrahiert die Weiterleitungseinheit 3 Adressinformationen und bewertet die Verwertbarkeit des Powerline-Rahmens. Der Powerline-Rahmen wird dann entweder in Richtung erste Uplink-Schnittstelle 3 oder in Richtung zweite Uplink-Schnittstelle 4 weitergeleitet oder wird verworfen. Wenn der Powerline-Rahmen in Richtung der ersten Uplink-Schnittstelle weitergeleitet wird, so verarbeitet ein erster Powerline-Modem-Chip 7 den Powerline-Rahmen und extrahiert die darin enthaltenen Daten. Nach der Extraktion der Daten aus der Powerline-Rahmen werden diese neu paketiert und an die erste Uplink-Schnittstelle ausgegeben. In Richtung zweiter Uplink-Schnittstelle ist ein zweiter Powerline-Modem-Chip 8 vorhanden, der entsprechend Powerline-Rahmen weiterverarbeitet. In dem hier dargestellten Ausführungsbeispiel beurteilt die Weiterleitungseinheit lediglich Powerline-Rahmen. Datenpakete, die von der ersten oder zweiten Uplink-Schnittstelle empfangen werden, werden durch den ersten oder zweiten Powerline-Modem-Chip in Powerline-Rahmen gepackt und direkt an die Powerline-Schnittstelle ausgegeben.

Nachfolgend werden nochmals einige Aspekte und Ausgestaltungen der Erfindung mit Blick auf eine SMGW-Struktur zusammengefasst:
Zum Ermöglichen einer logischen Trennung von Netzen wird erfindungsgemäß ein erweitertes Powerline-Modul geschaffen. Bei dem SMGW könnte dieses erweiterte Powerline-Modul als secure NTU (sNTU) bezeichnet werden, bei einem CLS-Gerät als secure CPE (sCPE).

Eine ähnlich wie in IEEE1901 beschriebene NTU (Network Termination Unit) erweitert um die folgenden Möglichkeiten:
- zwischen WAN- und CLS-Verkehr zu unterscheiden und so eine Trennung zwischen WAN- und CLS-Kommunikation zu realisieren
- zwei voneinander getrennten WAN- und CLS-Schnittstelle zum SMGW zu realisieren
- CPE-Management (BPL-Authentifizierung, Autorisierung, PHY-Monitoring) zu betreiben.

Die sNTU agiert als eine Art intelligenter Proxy. Der auf Anwendungs- und Kommunikationsebene die jeweilig richtige Entscheidung trifft, um das angeschlossene sCPE und die damit verbundene CLS Anwendung zu schützen.

Ein sCPE kann folgende Eigenschaften haben:
- kein Repeating
- BPL-MAC (Layer 2) Kommunikation zu sNTU
- Kommunikation auf Applikationsebene nur über sNTU

Generell hat das sNTU die Aufgabe, die Datenübertragung von und zum sCPE zu kontrollieren und entsprechend den gesetzten Regeln - den Weiterleitungsrichtlinien - zu verteilen. Grundsätzlich trägt es Sorge, dass jedwede Kommunikation auf Anwendungsebene immer über das SMGW läuft, das seinerseits die sicherheitsrelevanten Parameter und die Rechtmäßigkeit bzw. Zulässigkeit der Kommunikation überwacht.

Das sCPE kann sich nur mit dem vorher bestimmten sNTU verbinden und mit diesem kommunizieren. Es findet keine direkte Kommunikation des sCPE mit einem anderen BPL-Gerät als dem sNTU statt. Geräte bzw. Applikationen, die an das sCPE angeschlossen sind, können so nur über das SMGW kommunizieren. So wird sichergestellt, dass die Anforderungen aus der TR-03109 erfüllt werden.

Das sNTU agiert während der Einbindung des sCPE ins Netzwerk als Authentifizierungs- und Autorisierungsproxy, d.h. alle Anfragen seitens des sCPE müssen über das sNTU laufen.

Das sNTU wiederum kann den Status des sCPEs überwachen, ohne das Gerät direkt zu managen. Die Managementanwendung auf Applikationsebene würde immer durch eine Kommunikationsverbindung über das SMGW geschehen.

Hinsichtlich weiterer vorteilhafter Ausgestaltungen der erfindungsgemäßen Gegenstände wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Powerline-Modul
- 2: Powerline-Schnittstelle
- 3: Erste Uplink-Schnittstelle
- 4: Zweite Uplink-Schnittstelle
- 5: Weiterleitungseinheit
- 6: Speicher (für Weiterleitungsrichtlinien)
- 7: Erster Powerline-Modem-Chip
- 8: Zweiter Powerline-Modem-Chip

## Patentansprüche

1. Powerline-Modul zur Kommunikation unter Verwendung von Powerline Communication über ein Energieversorgungsnetzwerk, umfassend:
eine Powerline-Schnittstelle (2), die zum Empfangen von Powerline-Rahmen aus einem mit dem Powerline-Modul (1) verbundenen Energieversorgungsnetzwerk ausgebildet ist,
mindestens eine Uplink-Schnittstelle (3, 4), die zum Verbinden und zum Austausch von Datenpaketen mit einem übergeordneten Kommunikationsmodul ausgestaltet ist/sind, und
eine Weiterleitungseinheit (5), die dazu ausgebildet ist, eine Quell- und/oder Zieladresse eines empfangenen Powerline-Rahmens als Adressinformationen zu extrahieren,
**dadurch gekennzeichnet, dass** die Weiterleitungseinheit (5) zusätzlich dazu ausgebildet ist, den empfangenen Powerline-Rahmen basierend auf den Adressinformationen und basierend auf Weiterleitungsrichtlinien zu verwerfen oder einer weiteren Verarbeitung und/oder einer Ausgabe an eine der mindestens einen Uplink-Schnittstellen zuzuleiten.

2. Powerline-Modul nach Anspruch 1, **dadurch gekennzeichnet, dass** die Adressinformationen durch TEI-Adressen - Terminal Equipment Identifier Adressen - gebildet sind.

3. Powerline-Modul nach Anspruch 1 oder 2, **dadurch gekennzeichnet, dass** die Weiterleitungsrichtlinien Informationen darüber enthalten, aus welchem Netzwerksegment und/oder von welchem Powerline-Gerät Powerline-Rahmen empfangen werden dürfen und/oder aus welchem Netzwerksegment und/oder von welchem Powerline-Gerät keine Powerline-Rahmen empfangen werden dürfen.

4. Powerline-Modul nach einem der Ansprüche 1 bis 3, **dadurch gekennzeichnet, dass** die Weiterleitungsrichtlinien bei mehreren Uplink-Schnittstellen (3, 4) definieren, an welche der Uplink-Schnittstellen (4, 3) die Daten eines empfangenen Powerline-Rahmens ausgegeben werden dürfen.

5. Powerline-Modul nach einem der Ansprüche 1 bis 4, **dadurch gekennzeichnet, dass** die Weiterleitungseinheit (5) zusätzlich dazu ausgebildet ist, bei einem Datenpaket, das von einer der mindestens einen Uplink-Schnittstelle (3, 4) über die Powerline-Schnittstelle (2) versendet werden soll, Zieladressinformationen zu extrahieren und basierend auf den Zieladressinformationen und basierend auf Weiterleitungsrichtlinien ein Versenden über die Powerline-Schnittstelle (2) zu erlauben oder zu unterbinden.

6. Powerline-Modul nach einem der Ansprüche 1 bis 5, **gekennzeichnet durch** mindestens ein Modem-Modul, das zum Extrahieren von in einem Powerline-Rahmen enthaltenen Daten und zum Packen von Daten in einem Powerline-Rahmen ausgebildet ist.

7. Powerline-Modul nach Anspruch 6, **dadurch gekennzeichnet, dass** für jedes Modem-Modul ein Schlüssel oder Schlüsselpaar für eine Verschlüsselung und/oder Entschlüsselung von in einem Powerline-Rahmen enthaltenen Daten gespeichert ist.

8. Kommunikationseinheit mit einem Powerline-Modul nach einem der Ansprüche 1 bis 7 und einem übergeordneten Kommunikationsmodul, wobei die mindestens eine Uplink-Schnittstelle (3, 4) des Powerline-Moduls (1) mit einer korrespondierenden Kommunikationsschnittstelle des Kommunikationsmoduls verbunden ist.

9. Kommunikationseinheit nach Anspruch 8, **dadurch gekennzeichnet, dass** das Kommunikationsmodul ein SmartMeter-Gateway (SMGW) ist, wobei das Powerline-Modul (1) zwei Uplink-Schnittstellen (3, 4) aufweist, von denen eine erste Uplink-Schnittstelle (3) mit einer WAN-Schnittstelle - Wide Area Network Schnittstelle - des Kommunikationsmoduls und eine zweite Uplink-Schnittstelle (4) mit einem HAN-Schnittstelle - Home Area Network Schnittstelle - des Kommunikationsmoduls verbunden ist.

10. Kommunikationseinheit nach Anspruch 9, **dadurch gekennzeichnet, dass** die Weiterleitungseinheit (5) dazu ausgebildet ist, eingehende ARP-Anfragen - Address Resolution Protocoll Requests - für mit der Kommunikationseinheit verbundene Powerline-Geräte zu beantworten.

11. Kommunikationseinheit nach Anspruch 8, **dadurch gekennzeichnet, dass** das Kommunikationsmodul ein CLS-Gerät - Controllable Local System Gerät - ist, wobei das Powerline-Modul (1) eine Uplink-Schnittstelle (3, 4) aufweist, die mit einer HAN/CLS-Schnittstelle des Kommunikationsmoduls verbunden ist.

12. Kommunikationseinheit nach Anspruch 11, **dadurch gekennzeichnet, dass** die Weiterleitungsrichtlinien derart ausgebildet sind, dass die Weiterleitungseinheit (5) lediglich die Powerline-Rahmen weiterverarbeitet und/oder zur Ausgabe an die Uplink-Schnittstelle (3, 4) weiterleitet, wenn die Adressinformationen auf ein SmartMeter-Gateway als Absender der Powerline-Rahmens schließen lässt.

13. System mit mehreren Kommunikationseinheiten nach einem der Ansprüche 8 bis 12, wobei durch die Weiterleitungsrichtlinien die Kommunikation der Kommunikationseinheiten auf mindestens zwei logisch getrennte Netzwerksegmente aufgeteilt ist.

14. System nach Anspruch 13, **gekennzeichnet durch** eine Managementeinheit, die dazu ausgebildet ist, an die Kommunikationseinheiten Weiterleitungsrichtlinien zu verteilen und durchzusetzen.

15. Verfahren zur Kommunikation unter Verwendung von Powerline Communication über ein Energieversorgungsnetzwerk, unter Verwendung eines Powerline-Moduls nach einem der Ansprüche 1 bis 7 und/oder einer Kommunikationseinheit nach einem der Ansprüche 8 bis 12, umfassend die Schritte:
Empfangen eines Powerline-Rahmens aus einem Energieversorgungsnetzwerk,
Extrahieren einer Quell- und/oder Zieladresse aus dem Powerline-Rahmen zum Gewinnen von extrahierten Adressinformationen,
Bewerten der extrahierten Adressinformationen durch eine Weiterleitungseinheit (5) basierend auf Weiterleitungsrichtlinien und
Verwerfen des Powerline-Rahmens oder Verarbeiten und/oder Ausgeben des Powerline-Rahmens an eine der mindestens eine Uplink-Schnittstellen basierend auf dem Ergebnis der Bewertung durch die Weiterleitungseinheit (5).

## Claims

1. Power Line module for communication using Power Line Communication via an energy supply network, comprising:
a Power Line interface (2), which is constructed to receive Power Line frames from an energy supply network which is connected to the Power Line module (1),
at least one uplink interface (3, 4) which is/are constructed to connect and to exchange data packets with a superordinate communication module, and
a transfer unit (5) which is constructed to extract a source and/or target address of a received Power Line frame as address information,
**characterised in that** the transfer unit (5) is additionally constructed to reject the Power Line frame received based on the address information and based on transfer guidelines or to direct them to another processing operation and/or an output to one of the at least one uplink interfaces.

2. Power Line module according to claim 1, **characterised in that** the address information is formed by TEI addresses - Terminal Equipment Identifier addresses.

3. Power Line module according to claim 1 or 2, **characterised in that** the transfer guidelines contain information relating to the network segment and/or the Power Line device from which Power Line frames are permitted to be received and/or the network segment and/or the Power Line device from which no Power Line frames are permitted to be received.

4. Power Line module according to any one of claims 1 to 3, **characterised in that** the transfer guidelines at several uplink interfaces (3, 4) define the uplink interfaces (4, 3) at which the data of a received Power Line frame are permitted to be output.

5. Power Line module according to any one of claims 1 to 4, **characterised in that** the transfer unit (5) is additionally constructed, with a data packet which is intended to be transmitted by one of the at least one uplink interfaces (3, 4) via the Power Line interface (2), to extract target address information and based on the target address information and based on transfer guidelines to permit or prevent a transmission via the Power Line interface (2).

6. Power Line module according to any one of claims 1 to 5, **characterised by** at least one modem module which is constructed to extract data contained in a Power Line frame and to pack data in a Power Line frame.

7. Power Line module according to claim 6, **characterised in that** for each modem module a key or key pair is stored for encryption and/or decryption of data contained in a Power Line frame.

8. Communication unit having a Power Line module according to any one of claims 1 to 7 and a superordinate communication module, wherein the at least one uplink interface (3, 4) of the Power Line module (1) is connected to a corresponding communication interface of the communication module.

9. Communication unit according to claim 8, **characterised in that** the communication module is a SmartMeter Gateway (SMGW), wherein the Power Line module (1) has two uplink interfaces (3, 4), of which a first uplink interface (3) is connected to a WAN interface - Wide Area Network interface - of the communication module and a second uplink interface (4) is connected to a HAN interface - Home Area Network interface - of the communication module.

10. Communication unit according to claim 9, **characterised in that** the transfer unit (5) is constructed to respond to incoming ARP requests - Address Resolution Protocol requests - for Power Line devices which are connected to the communication unit.

11. Communication unit according to claim 8, **characterised in that** the communication module is a CLS device - Controllable Local System device - wherein the Power Line module (1) has an uplink interface (3, 4) which is connected to a HAN/CLS interface of the communication module.

12. Communication unit according to claim 11, **characterised in that** the transfer guidelines are constructed in such a manner that the transfer unit (5) further processes only the Power Line frames and/or transmits them for output to the uplink interface (3, 4) when the address information allows the conclusion that a Smart Meter Gateway is acting as the sender of the Power Line frames.

13. System having a plurality of communication units according to any one of claims 8 to 12, wherein, as a result of the transfer guidelines, the communication of the communication units is divided over at least two logically separated network segments.

14. System according to claim 13, **characterised by** a management unit which is constructed to distribute transfer guidelines to the communication units and to implement them.

15. Method for communicating using Power Line Communication via an energy supply network, using a Power Line module according to any one of claims 1 to 7 and/or a communication unit according to any one of claims 8 to 12, comprising the steps of:
receiving a Power Line frame from an energy supply network,
extracting a source and/or target address from the Power Line frame for obtaining extracted address information,
evaluating the extracted address information using a transfer unit (5) based on transfer guidelines, and
rejecting the Power Line frame or processing and/or
outputting the Power Line frame at one of the at least one uplink interfaces based on the result of the evaluation by the transfer unit (5).

## Revendications

1. Module de courant porteur en ligne pour la communication à l'aide d'une communication par courant porteur en ligne par l'intermédiaire d'un réseau d'alimentation en énergie, comprenant :
une interface de courant porteur en ligne (2) qui est conçue pour la réception de cadres de courant porteur en ligne à partir d'un réseau d'alimentation en énergie relié au module de courant porteur en ligne (1),
au moins une interface de liaison montante (3, 4) qui est conçue pour la liaison et l'échange de paquets de données avec un module de communication principal et
une unité de transmission (5) qui est conçue pour extraire une adresse source et/ou cible d'un cadre de courant porteur en ligne en tant qu'information d'adresse,
**caractérisé en ce que** l'unité de transmission (5) est en outre conçue pour rejeter le cadre de courant porteur en ligne reçu sur la base des informations d'adresse et sur la base de directives de transmission ou pour l'amener vers un traitement ultérieur et/ou une émission vers une des au moins une interface de liaison montante.

2. Module de courant porteur en ligne selon la revendication 1, **caractérisé en ce que** les informations d'adresse sont constituées d'adresses TEI - Terminal Equipment Identifier.

3. Module de courant porteur en ligne selon la revendication 1 ou 2, **caractérisé en ce que** les directives de transmission contiennent des informations concernant quel segment de réseau et/ou par quel appareil à courant porteur en ligne des cadres de courant porteur en ligne peuvent être reçus et/ou à partir de quel segment de réseau et/ou par quel appareil à courant porteur en ligne aucun cadre de courant porteur n ligne ne doit être reçu.

4. Module de courant porteur en ligne selon l'une des revendications 1 à 3, **caractérisé en ce que** les directives de transmission définissent, dans plusieurs interfaces de liaison montante (3, 4), vers lesquelles des interfaces de liaison montante (4, 3) les données d'un cadre de courant porteur en ligne peuvent être émises.

5. Module de courant porteur en ligne selon l'une des revendications 1 à 4, **caractérisé en ce que** l'unité de transmission (5) est en outre conçu pour extraire, dans un paquet qui doit être envoyé par une des au moins une interface de liaison montante (3, 4) par l'intermédiaire de l'interface de courant porteur en ligne (2), des informations d'adresse et pour permettre ou empêcher, sur la base des informations d'adresses cibles et sur la base des directives de transmission, un envoi par l'intermédiaire de l'interface de courant porteur en ligne (2).

6. Module de courant porteur en ligne selon l'une des revendications 1 à 5, **caractérisé par** au moins un module de modem qui est conçu pour l'extraction de paquets contenus dans un cadre de courant porteur en ligne et pour l'empaquetage de données dans un cadre de courant porteur en ligne.

7. Module de courant porteur en ligne selon la revendication 6, **caractérisé en ce que**, pour chaque module de modem, une clé ou une paire de clés est enregistrée pour un cryptage et/ou un décryptage des données contenues dans un cadre de courant porteur en ligne.

8. Unité de communication avec un module de courant porteur en ligne selon l'une des revendications 1 à 7 et un module de communication principal, dans lequel l'au moins une interface de liaison montante (3, 4) du module de courant porteur en ligne (1) est reliée avec une interface de communication correspondante du module de communication.

9. Unité de communication selon la revendication 8, **caractérisé en ce que** le module de communication est une passerelle SmartMeter (SMGW), dans lequel le module de courant porteur en ligne (1) comprend deux interfaces de liaison montante (3, 4) dont une première interface de liaison montante (3) est reliée à une interface WAN - Wide Area Network - du module de communication et une deuxième interface de liaison montante (4) est reliée à une interface HAN - Home Area Network - du module de communication.

10. Unité de communication selon la revendication 9, **caractérisé en ce que** l'unité de transmission (5) est conçue pour répondre à des de demandes ARP - Address Resolution Protocol Requests - pour des appareils à courant porteur en ligne reliés à l'unité de communication.

11. Unité de communication selon la revendication 8, **caractérisé en ce que** le module de communication est un appareil CLS - Controllable Local System - dans lequel le module de courant porteur en ligne (1) comprend une interface de liaison montante (3, 4) qui est reliée à une interface HAN/CLS du module de communication.

12. Unité de communication selon la revendication 11, **caractérisé en ce que** les directives de transmission sont conçues de façon à ce que l'unité de transmission (5) traite uniquement les cadres de courant porteur en ligne (3, 4) lorsque les informations d'adresses permettent de conclure à une passerelle SmartMeter en tant qu'émettrice du cadre de courant porteur en ligne.

13. Système avec plusieurs unités de communication selon l'une des revendications 8 à 12, dans lequel, grâce aux directives de transmission, la communication des unités de communication est répartie sur au moins deux segments de réseau séparés de manière logique.

14. Système selon la revendication 13, **caractérisé par** une unité de gestion qui est conçue pour répartir et faire respecter des directives de transmission vers les unités de communication.

15. Procédé de communication à l'aide d'une communication par courant porteur en ligne par l'intermédiaire d'un réseau d'alimentation en énergie, à l'aide d'un module de courant porteur en ligne selon l'une des revendications 1 à 7 et/ou d'une unité de communication selon l'une des revendications 8 à 12, comprenant les étapes suivantes :
réception d'un cadre de courant porteur en ligne provenant d'un réseau d'alimentation en énergie,
extraction d'une adresse source et/ou d'une adresse cible à partir du cadre de courant porteur en ligne pour l'obtention d'informations d'adresses extraites,
évaluation des informations d'adresses extraites par une unité de transmission (5) sur la base de directives de transmission et
rejet du cadre de courant porteur en ligne ou traitement et/ou émission du cadre de courant porteur en ligne vers une des au moins une interface de liaison montante sur la base du résultat de l'évaluation par l'unité de transmission (5).
